# EUROPÄISCHE PATENTSCHRIFT

(11) **EP 1 485 645 B1**
(45) Veröffentlichungstag und Bekanntmachung des Hinweises auf die Patenterteilung: **26.10.2011**
(21) Anmeldenummer: 03717161.8
(22) Anmeldetag: 20.03.2003
(51) Int. Cl.: F16K 27/00

(54) **ANORDNUNG ZUR BEHANDLUNG VON FLUIDEN**
SYSTEM FOR TREATING FLUIDS
DISPOSITIF DE TRAITEMENT DE FLUIDES

(30) Priorität: 21.03.2002 DE 10212611
(43) Veröffentlichungstag der Anmeldung: 15.12.2004
(73) Patentinhaber: SIEMENS AKTIENGESELLSCHAFT, 80333 München (DE)
(72) Erfinder: BURGER, Josef, 92546 Schmidgaden (DE); HEEL, Oliver, 92224 Amberg (DE); LOHF, Astrid, 76185 Karlsruhe (DE)
(86) Internationale Anmeldenummer: PCT/DE2003/000934
(87) Internationale Veröffentlichungsnummer: WO 2003/081103

(56) Entgegenhaltungen:
- WO-A-01/36085
- WO-A-99/45302
- US-A- 4 714 091
- US-A- 5 605 179
- US-A1- 2002 007 858

## Beschreibung

Die Erfindung betrifft eine Anordnung nach dem Oberbegriff von Anspruch 1.

Bei einer derartigen, aus der WO 99/45302 bekannten Anordnung sind unterschiedliche Einrichtungen zur Fluidbehandlung, wie z. B. Ventile, Druckmessumformer, oder Durchflussregler, auf einer Montageseite einer die Einrichtung mit den Fluiden versorgenden bzw. die Fluide entsorgenden Einheit montiert. Die fluidver- und -entsorgende Einheit enthält dazu Fluidleitungen, die auf der Montageseite in Fluidanschlüssen enden, so dass die Einrichtungen zur Fluidbehandlung bei ihrer Montage an die zugeordneten Fluidanschlüsse ankoppeln.

Bei einer aus der WO 01/36085 bekannten Anordnung zur Behandlung von Fluiden sind Prozessmodule, die im Rahmen der Fluidbehandlung modulspezifische Funktionen ausüben, aneinandergereiht und steuerungsseitig über einen Datenbus und fluidseitig über einen Fluidbus miteinander verbunden. Der Fluidbus kann ebenso wie der Datenbus jeweils aus Busabschnitten innerhalb der Prozessmodule bestehen, wobei durch das Aneinanderreihen der Prozessmodule der jeweilige Bus aus den Busabschnitten zusammengesetzt wird. Alternativ können die Prozessmodule über ihnen zugeordnete Adapter individuell an einen äußeren Fluidbus angeschlossen werden.

Unter Behandlung von Fluiden ist hier insbesondere deren Analyse und/oder Synthese einschließlich der dazu erforderlichen Nebenfunktionen, wie z. B. Pumpen, Temperieren, Filtern usw., zu verstehen, wobei es sich bei den Fluiden um Flüssigkeiten, Gase oder von Trägerfluiden transportierte Feststoffe handeln kann. Oftmals stehen unterschiedliche Funktionen, die bei der Behandlung von Fluiden auszuführen sind, in einer engen Wirkungsbeziehung zueinander; ein Beispiel hierfür ist das Mischen zweier Edukte bei gleichzeitiger Abführung der Reaktionswärme mittels eines Wärmeübertragungsfluids. Der Erfindung liegt die Aufgabe zugrunde, den Aufbau einer Anordnung zur Behandlung von Fluiden im Hinblick auf die Realisierung solcher Funktionen zu optimieren.

Gemäß der Erfindung wird die Aufgabe durch die in Anspruch 1 angegebene Anordnung gelöst.

Vorteilhafte Weiterbildungen der erfindungsgemäßen Anordnung sind in den Unteransprüchen angegeben.

Da die Einrichtung zur Fluidbehandlung aus Komponenten zur Wahrnehmung unterschiedlicher Funktionen im Rahmen der Fluidbehandlung besteht und die Komponenten in unterschiedlichen Ebenen angeordnet sind, ergibt sich insgesamt ein kompakter sandwichartiger Aufbau der Einrichtung, Die Komponenten mit den unterschiedlichen Funktionen lassen sich je nach Erfordernis modulartig zusammenfügen, so dass eine große Variabilität bei der Kombination unterschiedlicher Funktionen gegeben ist. Durch die Anordnung in übereinander liegenden Ebenen befinden sich außerdem unmittelbar benachbarte Komponenten in großflächigem Kontakt zueinander, so dass insbesondere eine wirkungsvolle Temperierung einzelner Komponenten möglich ist. So können beispielsweise eine Komponente, die die Funktion eines Reaktors ausübt, und eine weitere Komponente, welche die Funktion eines Wärmetauschers ausübt, in unmittelbar benachbarten Ebenen angeordnet sein, so dass der Wärmetauscher in großflächigem Kontakt an dem Reaktor anliegt und diesen wirkungsvoll kühlen kann. Ferner können die einzelnen Komponenten im Hinblick auf ihre jeweilige Funktion optimal ausgelegt werden, z. B. aus einem für den jeweiligen Anwendungsfall geeigneten Material, beispielsweise Edelstahl, gefertigt sein, so dass unterschiedliche Komponenten aus unterschiedlichen Materialien bestehen können, innerhalb der einzelnen Komponenten jedoch ein Materialmix und die damit verbundenen Probleme, z. B. Dichtungsprobleme, vermieden werden.

Die fluidische Verbindung zwischen den Komponenten in den einzelnen Ebenen und den Fluidleitungen in der Einheit zur Fluidver- und -entsorgung erfolgt durch die Fluidanschlüsse, die entsprechend unterschiedlich lang ausgebildet sind und sich von der Montageseite der Einheit bis zu der jeweiligen Komponente erstrecken; es werden daher insbesondere keine Schlauchverbindungen von der Einheit zur Fluidver- und -entsorgung zu den einzelnen Komponenten hin benötigt. Dabei enthalten die in den zur Montageseite der Einheit näheren Ebenen liegenden Komponenten vorzugsweise Durchführungen für die Fluidanschlüsse derjenigen Fluidleitungen, die zur Fluidver- und -entsorgung der von der Montageseite entfernteren Komponenten dienen. Da die Fluidanschlüsse im Unterschied zur äußeren Schlauchverbindungen innerhalb des Verbundes der übereinander liegenden Komponenten verlaufen, werden die durch sie geführten Fluide unabhängig von äußeren Temperaturschwankungen auf gleicher Temperatur wie die der Komponenten gehalten.

Die erfindungsgemäße Anordnung kann eine Vielzahl von fluidbehandelnden Einrichtungen mit jeweils unterschiedlichen Komponenten aufweisen. Um auch dabei einen weitgehend einheitlichen Aufbau der erfindungsgemäßen Anordnung zu erreichen, können die von den Komponenten ausgeübten Funktionen in unterschiedliche Klassen, wie z. B. Wärmezu- und -abfuhr, Fluidverteilung und die eigentliche Fluidbehandlung, unterteilt und für unterschiedliche Funktionsklassen unterschiedliche Ebenen fest vorgegeben werden. Liegen z. B. die Komponenten für die Wärmezu- und -abfuhr, beispielsweise Wärmetauscher, immer in einer bestimmten Ebene, so können bei der Einheit zur Fluidver- und -entsorgung die entsprechenden Fluidanschlüsse für das Wärmeübertragungsfluid durchgängig so ausgeführt werden, dass sie in dieser bestimmten Ebene enden. Auch können die Fluidanschlüsse für das Wärmeübertragungsfluid einen größeren Durchflussquerschnitt als bei anderen Fluidanschlüssen aufweisen. Falls bei einzelnen Einrichtungen zur Fluidbehandlung eine bestimmte Funktionsklasse nicht vorhanden ist, weil z. B. keine Wärmezu- und -abfuhr benötigt wird, kann dort an Stelle der nicht benötigten Komponente eine funktionslose, abstandshaltende Ersatzkomponente vorgesehen werden, die dafür sorgt, dass die übrigen Komponenten in den ihnen fest zugewiesenen Ebenen zu liegen kommen.

Vorzugsweise bestehen die auf der Montageseite der Einheit übereinander montierten Komponenten aus einer unteren Fluidtemperierungs-Komponente, einer mittleren Fluidverteilungs-Komponente und einer oberen individuellen Fluidbehandlungs-Komponente, wobei die Fluidtemperierungs-Komponente zur Temperierung der Fluide in den darüber liegenden Komponenten und die Fluidverteilungs-Komponente zur individuellen Fluidver- und -entsorgung der Fluidbehandlungs-Komponente dient. Bei der Fluidtemperierungs-Komponente kann es sich um eine Standardkomponente, beispielsweise einen Wärmetauscher, handeln, während es sich bei der Fluidbehandlungs-Komponente um eine individuelle Komponente z. B. ein Reaktor, handelt, die eine spezielle Funktion, im Rahmen der Fluidbehandlung ausübt; die Fluidverteilungs-Komponente sorgt für die Fluidverbindung zwischen den standardmäßigem Fluidanschlüssen der Einheit zur Fluidver- und -entsorgung und den Anschlüssen der individuellen Komponente.

Um neben der Fluidver- und -entsorgung durch die Einheit, an der die fluidbehandelnden Einrichtungen montiert sind, auch eine direkte Überleitung von Fluiden aus einer Komponente in eine unmittelbar benachbarte Komponente zu ermöglichen, weisen diese Komponenten vorteilhafterweise jeweils Fluidanschlussstücke auf, die bei der Montage der Komponenten eine Fluidverbindung zwischen beiden Komponenten herstellen.

Vorzugsweise ist zumindest ein Teil der Komponenten in Form von Platten ausgebildet ist, die in einer oder beiden zur Montageseite parallelen Seiten kanalartige Vertiefungen zur Führung der Fluide enthalten; die kanalartigen Vertiefungen werden dabei von der jeweils unmittelbar benachbarten Komponente, ggf. unter Zwischenlage einer Abdichtungslage, abgedeckt. Die Abdichtungslage kann entfallen, wenn nur eine der einander gegenüber liegenden Seiten zweier benachbarter Komponenten die kanalartigen Vertiefungen enthält. Anderenfalls trennt die Abdichtungslage die Fluide in den benachbarten Komponenten, wobei es sich z. B. bei dem Fluid in der einen Komponente um ein Wärmeübertragungsfluid zur Erwärmung oder Abkühlung des Fluids in der anderen Komponente handeln kann.

An einer einzigen Einheit zur Fluidver- und -entsorgung können, wie bereits erwähnt, mehrere gleichartige oder unterschiedliche Einrichtungen zur Fluidbehandlung montiert werden. Vorzugsweise ist vorgesehen, dass darüber hinaus mehrere Einheiten zur Fluidver- und -entsorgung miteinander verbindbar sind, wozu die Einheiten Anschlussseiten aufweisen, an denen sie unter Verbindung der in ihnen enthaltenen Fluidleitungen zu einem Fluidbus miteinander verbindbar sind. Damit die Einheiten sicher miteinander verbunden sind, weisen sie vorzugsweise jeweils Verriegelungseinrichtungen zur mechanischen Verriegelung mit jeweils benachbarten Einheiten auf.

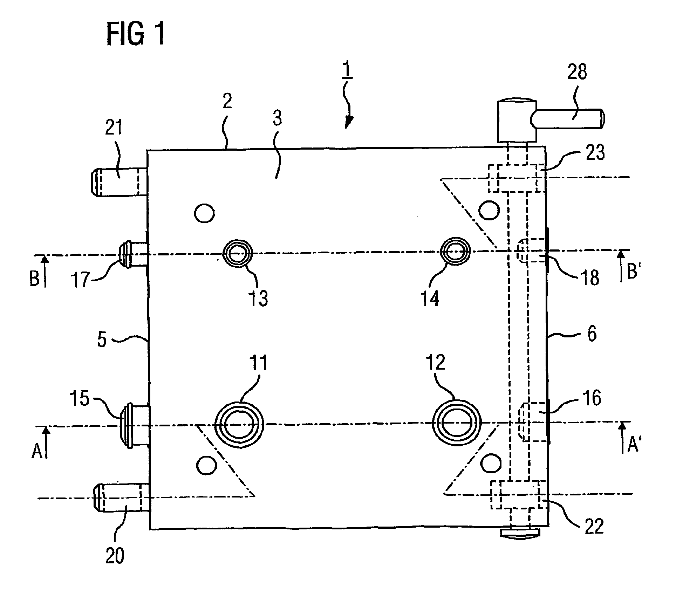

Zur weiteren Erläuterung der Erfindung wird im Folgenden auf die Figuren der Zeichnung Bezug genommen; im Einzelnen zeigen
- Figur 1: ein Ausführungsbeispiel für die Einheit zur Fluidver- und -entsorgung mit Blick auf die Montageseite,
- Figur 2: die Einheit zur Fluidver- und -entsorgung mit einer darauf montierten Einrichtung zur Fluidbehandlung in dem in Figur 1 angegebenen Schnitt A-A' und
- Figur 3: die Einheit zur Fluidver- und -entsorgung mit der darauf montierten Einrichtung zur Fluidbehandlung in dem in Figur 1 angegebenen Schnitt B-B'.

Die Einheit zur Fluidver- und -entsorgung 1 besteht aus einem Rahmen 2 mit einer Montageseite 3 zur Montage einer Einrichtung zur Fluidbehandlung 4. Zwischen zwei parallelen und zur Montageseite 3 senkrechten Anschlussseiten 5 und 6 verlaufen im Inneren der Einheit 1 Fluidleitungen 7, 8, 9 und 10, die auf der Montageseite 3 in Fluidanschlüssen 11, 12, 13 und 14 und an den Anschlussseiten 5 und 6 in weiteren Fluidanschlüssen 15, 16, 17 und 18 enden. Die mit.7 und 8 bezeichneten Fluidleitungen dienen zur Führung eines Wärmeübertragungsfluids und weisen daher ebenso wie die zugehörigen Fluidanschlüsse 11, 12, 15 und 16 einen größeren Durchflussquerschnitt als die übrigen Fluidleitungen 9 und 10 mit den Fluidanschlüssen 13, 14, 17 und 18 auf. Zur Konstanthaltung der Temperatur in den Fluidleitungen 7 bis 10 sind in dem Inneren der Einheit 1 Isolierkörper 19 angeordnet, die die Fluidleitungen 7 bis 10 umgeben. Die Isolierkörper 19 können schwammartig ausgebildet sein, um im Falle von Lecks in den Fluidleitungen 7 bis 10 austretende Fluide aufzusaugen.

An den Anschlussseiten 5 und 6 der Einheit zur Fluidver- und -entsorgung 1 kann jeweils eine weitere gleichartige Einheit angeschlossen werden, wobei die Fluidleitungen in den jeweils benachbarten Einheiten über ihre Fluidanschlüsse an den Anschlussseiten miteinander verbunden werden und sich zu einem Fluidbus ergänzen. Auf diese Weise kann eine Vielzahl von Einheiten 1 aneinander gereiht werden. Damit die Einheiten zueinander richtig justiert werden und sicher miteinander verbunden sind, weisen sie jeweils eine Verriegelungseinrichtung zur mechanischen Verriegelung mit der jeweils benachbarten Einheit auf. Bei dem gezeigten Ausführungsbeispiel besteht die Verriegelungseinrichtung auf der einen Anschlussseite 5 aus Zapfen 20 und 21, die in Führungslöcher 22 bzw. 23 auf der anderen Anschlussseite 6 der benachbarten Einheit hinein ragen. Die Zapfen 20 und 21 weisen jeweils eine seitliche Aussparung 24 bzw. 25 auf, während im Bereich der Führungslöcher 22 und 23 jeweils ein Exzenter 26 bzw. 27 mittels eines Hebels 28 verdrehbar gelagert ist. in einer ersten Verdrehstellung gibt der Exzenter 26 bzw. 27 den Weg durch das Führungsloch 22 bzw. 23 frei, während er in einer zweiten Verdrehstellung den Zapfen 20 bzw. 21 in dem Führungsloch 22 bzw. 23 verriegelt.

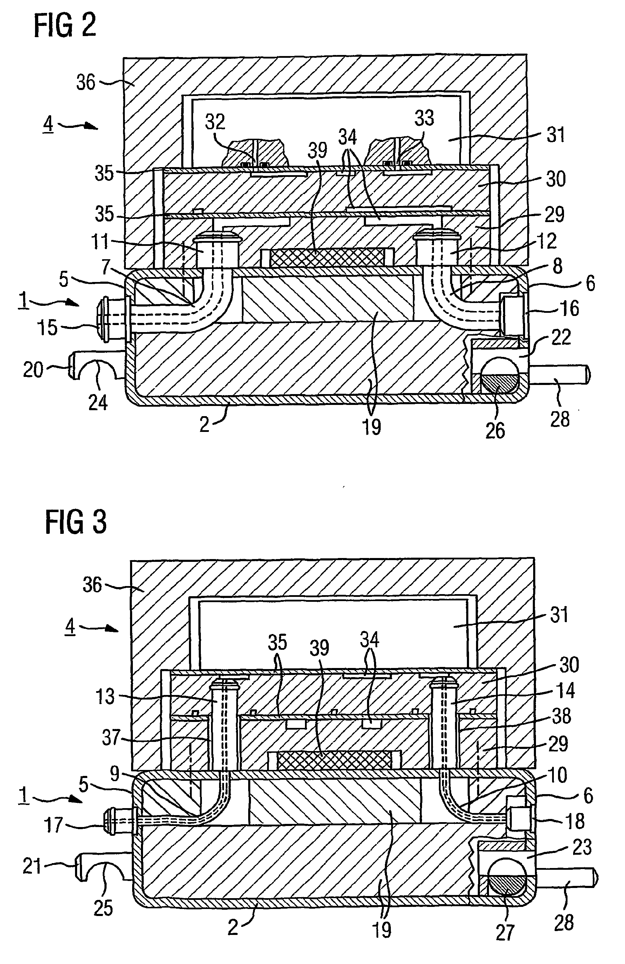

Wie die Figuren 2 und 3 zeigen, weist die Einrichtung zur Fluidbehandlung 4 mehrere Komponenten 29, 30 und 31 auf, die auf der Montageseite 3 der Einheit zur Fluidver- und -entsorgung 1 in übereinander liegenden Ebenen montiert sind. Die Komponenten 29, 30 und 31 üben im Rahmen der Fluidbehandlung unterschiedliche Funktionen aus. So dient bei dem gezeigten Ausführungsbeispiel die Komponente 29 zur Temperierung (Kühlung oder Erwärmung) und wird daher über die Fluidanschlüsse 11 und 12 aus der Einheit 1 mit einem Wärmeübertragungsfluid versorgt. Ferner enthält die Komponente 29 auf ihrer der Einheit 1 zugewandten Seite einen Freiraum zur Aufnahme einer elektrisch betriebenen Heizeinrichtung 39. Die Komponente 30 dient zur Verteilung oder Überleitung eines über die Fluidanschlüsse 13 und 14 zu- bzw. abgeführten Fluids in die oder aus der Komponente 31, in der die eigentliche Fluidbehandlung erfolgt. Dabei erfolgt die Überleitung des Fluids zwischen den benachbarten Komponenten 30 und 31 über Anschlüsse 32 und 33, die bei der Montage der Komponenten 30 und 31 unmittelbar eine Fluidverbindung zwischen den beiden Komponenten 30 und 31 herstellen. Bei der Komponente 31 kann es sich beispielsweise um eine Ventilanordnung, Pumpe, Filter, Mischer, Reaktor, Verweiler, Analysengerät usw. handeln. Innerhalb der Komponenten 29 und 30 und ggf. auch 31 werden die jeweiligen Fluide in kanalartigen Vertiefungen 34 geführt, die in zur Montageseite 3 der Einheit 1 parallelen Seiten der Komponenten 29 und 30 ausgebildet und von den jeweils benachbarten Komponenten unter Zwischenlage einer Abdichtungslage 35 abgedeckt sind. Die Abdichtungslagen 35 weisen je nach dem, ob alle Komponenten 29, 30, 31 gleich oder unterschiedlich temperiert werden sollen, eine hohe oder geringe Wärmeleitfähigkeit auf.

Um externe Einflüsse, insbesondere Temperatureinflüsse, auf die Komponenten 29, 30 und 31 zu minimieren, sind diese in einem Isolationsmaterial 36 eingeschlossen, das hier als Haube über die Komponenten 29, 30 und 31 gestülpt ist.

Die auf der Montageseite 3 der Einheit 1 ausgebildeten Fluidanschlüsse 11 bis 14 zur Fluidver- und -entsorgung der in den unterschiedlichen Ebenen angeordneten Komponenten 29 und 30 sind unterschiedlich lang ausgebildet und erstrecken sich von der Montageseite 3 bis zu der jeweiligen Komponente 29 bzw. 30. Dabei enthält die zur Montageseite 3 nähere untere Komponente 29 Durchführungen 37 und 38 für die zur Fluidver- und - entsorgung der darüber liegenden Komponente 29 dienenden längeren Fluidanschlüsse 13 und 14. Wie bereits erwähnt, erfolgt der Fluidaustausch zwischen den beiden Komponenten 30 und 31 unmittelbar.

Es können natürlich auch mehr als die bei dem hier gezeigten Ausführungsbeispiel vorhandenen vier Leitungen 7 bis 10 in der fluidver- und -entsorgenden Einheit 1 vorgesehen werden. Die Fluidanschlüsse 11 bis 18 können ferner selbstdichtend ausgebildet sein um beim Entfernen von Komponenten, z. B. 29, oder beim Auseinanderstecken von miteinander verbundenen Einheiten 1 den Austritt von Fluiden zu verhindern.

Die fluiclbehandelnde Einrichtung 4 mit den in ihr enthaltenen Komponente 29, 30 und 31 kann über die Einheit 1 außer mit Fluiden auch mit Daten und Energie versorgt werden, so wie dies aus der eingangs erwähnten WO 01/36085 bekannt ist. Dazu können zusätzlich zu den Fluidanschlüssen 11 bis 18 entsprechende Daten- und Stromversorgungsanschlüsse vorgesehen sein. Weiterhin kann der Verriegelungszustand jeweils benachbarter Einheiten 1 und/oder der Montagezustand der Komponenten 29 bis 30 auf der Einheit 1, beispielsweise elektrisch, überwacht werden.

## Patentansprüche

1. Anordnung zur Behandlung von Fluiden mit einer Einheit (1) zur Fluidver- und -entsorgung, die Fluidleitungen (7, 8, 9, 10) enthält, welche auf einer Montageseite (3) der Einheit (1) in Fluidanschlüssen (11, 12, 13, 14) enden, und mit mindestens einer Einrichtung (4), in der die Fluidbehandlung erfolgt und die auf der Montageseite (3) der Einheit (1) montiert ist und dabei an die Fluidanschlüsse (11, 12, 13, 14) ankoppelt, **dadurch gekennzeichnet, dass** die mindestens eine Einrichtung (4) Komponenten (29, 30, 31) aufweist, die im Rahmen der Fluidbehandlung unterschiedliche Funktionen wahrnehmen und auf der Montageseite (3) der Einheit (1) in übereinander liegenden Ebenen montiert sind, und dass die Fluidanschlüsse (11, 12, 13, 14) zur Fluidver- und -entsorgung der unterschiedliche Funktionen Wahrnehmenden Komponenten (29, 30) jeweils unterschiedlich lang ausgebildet sind sich und von der Montageseite (3) bis zu der jeweiligen Komponente (29, 30) erstrecken.

2. Anordnung nach Anspruch 1, **dadurch gekennzeichnet, dass** die in den zur Montageseite (3) der Einheit (1) näheren Ebenen liegenden Komponenten (29) Durchführungen (37, 38) für die Fluidanschlüsse (13, 14) derjenigen Fluidleitungen (9, 10) enthalten, die zur Fluidver- und - entsorgung der von der Montageseite (3) entfernteren Komponenten (30) dienen.

3. Anordnung nach Anspruch 1 oder 2, **dadurch gekennzeichnet, dass** für unterschiedliche Klassen von Funktionen unterschiedliche Ebenen vorgegeben sind, in denen die funktionsausübenden Komponenten (29, 30, 31) angeordnet sind, und dass bei nicht vorgesehenen Funktionsklassen anstelle der jeweils nicht benötigten Komponente eine funktionslose abstandshaltende Ersatzkomponente eingesetzt ist.

4. Anordnung nach Anspruch 3, **dadurch gekennzeichnet, dass** die auf der Montageseite (3) der Einheit (1) übereinander montierten Komponenten (29, 30, 31) aus einer unteren Fluidtemperierungs-Komponente (29), einer mittleren Fluidverteilungs-Komponente (30) und einer oberen individuellen Fluidbehandlungs-Komponente (31) bestehen, wobei die Fluidtemperierungs-Komponente (29) zur Temperierung der Fluide in den darüber liegenden Komponenten (30, 31) und die Fluidverteilungs-Komponente (30) zur individuellen Fluidver- und -entsorgung der Fluidbehandlungs-Komponente (31) dient.

5. Anordnung nach einem der vorangehenden Ansprüche, **dadurch gekennzeichnet, dass** zur Überleitung von Fluiden aus einer Komponente (30) in eine unmittelbar benachbarte Komponente (31) diese Komponenten (30, 31) jeweils Anschlüsse (32, 33) aufweisen, die bei der Montage der Komponenten (30, 31) eine Fluidverbindung zwischen beiden Komponenten (30, 31) herstellen.

6. Anordnung nach einem der vorangehenden Ansprüche, **dadurch gekennzeichnet, dass** zumindest ein Teil der Komponenten (29, 30, 31) in Form von Platten ausgebildet ist, die in einer oder beiden zur Montageseite (3) parallelen Seiten kanalartige Vertiefungen (34) zur Führung der Fluide enthalten, und dass die kanalartigen Vertiefungen (34) von der jeweils unmittelbar benachbarten Komponente abgedeckt sind.

7. Anordnung nach Anspruch 6, **dadurch gekennzeichnet, dass** die Einheit (1) zur Fluidver- und -entsorgung Anschlussseiten (5, 6) mit Verriegelungseinrichtungen (20 bis 28) zur Verbindung und mechanischen Verriegelung der Einheit (1) mit benachbarten weiteren Einheiten zur Fluidver- und -entsorgung aufweist, wobei die in den miteinander verbundenen Einheiten enthaltenen Fluidleitungen (7, 8, 9, 10) zu einem Fluidbus miteinander verbunden sind.

## Claims

1. Arrangement for the treatment of fluids, with a unit (1) for the fluid supply and disposal, containing fluid lines (7, 8, 9, 10) which terminate on a mounting side (3) of the unit (1) in the fluid connections (11, 12, 13, 14), and with at least one device (4) in which the fluid treatment takes place and which is mounted on the mounting side (3) of the unit (1) and at the same time couples to the fluid connections (11, 12, 13, 14), **characterized in that** the at least one device (4) has components (29, 30, 31) which perform different functions within the framework of fluid treatment and are mounted on the mounting side (3) of the unit (1) in planes lying one above the other, and **in that** the fluid connections (11, 12, 13, 14) for the fluid supply and disposal of the various components (29, 30) performing functions are in each case designed with a different length and extend from the mounting side (3) as far as the respective component (29, 30).

2. Arrangement according to Claim 1, **characterized in that** the components (29) lying in the planes nearer to the mounting side (3) of the unit (1) contain leadthroughs (37, 38) for the fluid connections (13, 14) of those fluid lines (9, 10) which serve for the fluid supply and disposal of the components (30) further from the mounting side (3).

3. Arrangement according to Claim 1 or 2, **characterized in that**, for different classes of functions, different planes are stipulated, in which the components (29, 30, 31) performing functions are arranged, and **in that**, in the case of function classes not provided, a functionless substituted spacer component is used instead of the component not required in each case.

4. Arrangement according to Claim 3, **characterized in that** the components (29, 30, 31) mounted one above the other on the mounting side (3) of the unit (1) consist of a lower fluid temperature control component (29), a middle fluid distribution component (30) and an upper individual fluid treatment component (31), the fluid temperature control component (29) serving for controlling the temperature of the fluids in the components (30, 31) lying above it, and the fluid distribution component (30) serving for individual fluid supply and disposal of the fluid treatment components (31).

5. Arrangement according to one of the preceding claims, **characterized in that**, for the transfer of fluids from one component (30) into a directly adjacent component (31), these components (30, 31) have in each case connections (32, 33) which, when the components (30, 31) have been mounted, make a fluid connection between the two components (30, 31).

6. Arrangement according to one of the preceding claims, **characterized in that** at least some of the components (29, 30, 31) are designed in the form of plates which contain, in one or both sides parallel to the mounting side (3), channel-like depressions (34) for guiding the fluids, and **in that** the channel-like depressions (34) are covered in each case by the directly adjacent component.

7. Arrangement according to claim 6, **characterized in that** the unit (1) for fluid supply and disposal has connection sides (5, 6) with locking devices (20 to 28) for connecting and mechanically locking the unit (1) to adjacent further units for fluid supply and disposal, the fluid lines (7, 8, 9, 10) contained in the interconnected units being connected to one another to form a fluid bus.

## Revendications

1. Dispositif de traitement de fluides comprenant une unité ( 1 ) d'alimentation en fluide et d'évacuation du fluide, qui comporte des conduits ( 7, 8, 9, 10 ) pour du fluide, lesquels se terminent sur un côté ( 3 ) de montage de l'unité ( 1 ) en des raccords ( 11, 12, 13, 14 ) pour du fluide, et comprenant au moins un dispositif ( 4 ) dans lequel s'effectue le traitement de fluide et qui est monté du côté ( 5 ) de montage de l'unité ( 1 ) et se couple ainsi aux raccords ( 11, 12, 13, 14 ) pour du fluide, **caractérisé en ce qu**'au moins un dispositif ( 4 ) a des composants ( 29, 30, 31 ) qui assument, dans le cadre du traitement de fluide, des fonctions différentes et qui sont montés en des plans superposés du côté ( 3 ) de montage de l'unité ( 1 ) et en ce que les raccords ( 11, 12, 13 ,14 ) pour du fluide sont constitués pour l'alimentation en fluide et l'évacuation du fluide des composants ( 29, 30 ) assumant des fonctions différentes, en étant respectivement de longueurs différentes et en s'étendant du côté ( 3 ) de montage jusqu'au composant ( 29, 30 ) respectif.

2. Dispositif suivant la revendication 1, **caractérisé en ce que** les composants ( 29 ), se trouvant dans les plans les plus proches du côté ( 3 ) de montage de l'unité ( 1 ), comportent des traversées ( 37, 38 ) pour les raccords ( 13, 14 ) pour du fluide des conduits ( 9, 10 ) pour du fluide, qui servent à l'alimentation en fluide et à l'évacuation du fluide des composants ( 30 ) les plus éloignés du côté ( 3 ) de montage.

3. Dispositif suivant la revendication 1 ou 2, **caractérisé en ce qu**'il est prescrit, pour des classes différentes de fonctions, des plans différents dans lesquels les composants ( 29, 30, 31 ) exerçant des fonctions sont disposés et en ce que, pour des classes de fonctions qui ne sont pas prévues, un composant de remplacement, sans fonction et maintenant la distance, est mis au lieu du composant qui n'est pas nécessaire respectivement.

4. Dispositif suivant la revendication 3, **caractérisé en ce que** les composants ( 29, 30, 31 ) montés les uns sur les autres du côté ( 3 ) de montage de l'unité ( 1 ) sont constitués d'un composant ( 29 ) inférieur de mise en température du fluide, d'un composant ( 30 ) intermédiaire de répartition du fluide et d'un composant ( 31 ) supérieur de traitement individuel du fluide, le composant ( 29 ) de mise en température du fluide servant à la mise en température des fluides dans les composants ( 30, 31 ) se trouvant au dessus et le composant ( 30 ) de répartition du fluide servant à l'alimentation en fluide et en l'évacuation du fluide individuel du composant ( 31 ) de traitement de fluide.

5. Dispositif suivant l'une des revendications précédentes, **caractérisé en ce que**, pour faire passer des fluides d'un composant ( 30 ) dans un composant ( 31 ) voisin immédiatement, ces composants ( 30, 31 ) ont respectivement des raccords ( 32, 33 ) qui, lors du montage des composants ( 30, 31 ), , procurent une communication pour du fluide entre les deux composants ( 30, 31 ).

6. Dispositif suivant l'une des revendications précédentes, **caractérisé en ce qu'**au moins une partie des composants ( 29, 30, 31 ) est constituée sous la forme de plateaux qui, dans une ou les deux faces parallèles au côté ( 3 ) de montage, comportent des cavités ( 34 ) de type en canal pour guider les fluides et **en ce que** les cavités ( 34 ) de type en canal sont recouvertes par le composant voisin immédiatement respectivement.

7. Dispositif suivant la revendication 6, **caractérisé en ce que** l'unité ( 1 ) d'alimentation en fluide et d'évacuation du fluide comporte des côtés ( 5, 6 ) de raccordement ayant des dispositifs ( 20 à 28 ) de verrouillage pour la liaison et le verrouillage mécanique de l'unité ( 1 ) avec d'autres unités voisines d'alimentation en fluide et d'évacuation du fluide, les conduits ( 7, 8, 9, 10 ) pour du fluide contenus dans les unités reliées les unes aux autres étant reliés entre eux en un bus pour du fluide.
